# EUROPEAN PATENT APPLICATION

(11) **EP 1 162 529 A1**
(43) Date of publication of application: **12.12.2001**
(21) Application number: 01304911.9
(22) Date of filing: 05.06.2001
(51) Int. Cl.: G05D 23/20

(54) **A water-heating system controller**

(30) Priority: 08.06.2000 GB 0014007
(71) Applicant: Gasforce Limited, Newport, Gwent NT9 4UJ (GB)
(72) Inventor: Cope, Derek, New Romney, Kent, TN28 8DG (GB)
(74) Representative: Ertl, Nicholas Justin

(57) **Abstract**

A controller for a water-heating system comprising a heat sensor arrangement and a switch for controlling the operation of a heater in the heating system is described. The sensor detects temperature of water in a water storage tank. The controller has a first mode maintaining temperature in a first range and a second mode in which the switch is switched off until temperature drops below the lower limit of the first range whereupon the heater is turned on.

## Description

### Background to the Invention

A standard water-heating system is typically controlled by a timer unit. The timer signals to the water heater to operate for pre-programmed periods. During the period that the water heater is switched on, the water-heater firings are controlled by a thermostat. The thermostat is set at a maximum and minimum setting, for example, a maximum setting of 70°C and a minimum setting of 60°C.

The object of the timer is to ensure that during any given 24 hour period, an adequate quantity of hot water is available for the end users of the hot water at a time when it is needed, such as early morning and early evening, whilst at the same time keeping energy expenditure to a minimum.

However, there may be an unexpected requirement for hot water outside of the pre-programmed times. Assuming of course that the ultimate consideration is the comfort of the building occupants, the only solution presently available is to leave the water-heating system on continuously. The thermostat then maintains the water temperature between the set temperatures at all times. However, it has been calculated that a similar amount of energy is expended in maintaining the water within the temperature levels when hot water is not required as is expended in providing the required hot water.

In instances where the user of the boiler is not the party responsible for payment of the utility bill, there is a temptation to leave the heating on permanently. This may be the case for hotels and public houses.

### Summary of the Invention

According to a first aspect of the present invention, a controller for a water-heating system comprising a heat sensor arrangement and a switch for controlling the operation of a heater in the heating system, the heat sensor arrangement detecting a temperature of water in a water storage tank of the system, the controller being operable in a first mode in which the switch is controlled to maintain the temperature in a first temperature range, and a second mode in which the switch is turned off until the temperature drops to a second temperature below the lower limit of the first temperature range whereupon the heater is turned on.

Thus, in the present invention, the water-heating system may be switched off, thereby conserving energy and reducing cost, but still be responsive to any unexpected demand for hot water.

Preferably the heater is turned on for a predetermined time in the second mode.

Preferably the heat sensor comprises a thermostat for providing the first temperature range, and also comprises a diode heat sensor set to the second temperature.

Preferably the switch also functions as a timer which is programmable to define the times during which the system operates in the first mode.

Preferably the timer is lockable to prevent reprogramming by an unauthorised party.

### Brief Description of the Drawings

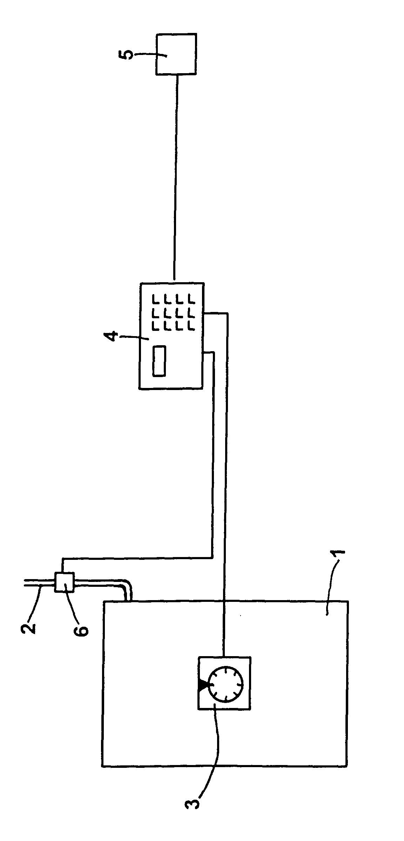

An example of the present invention will now be described in detail with reference to the accompanying drawing, which shows a water-heating system incorporating a controller.

### Detailed Description

The drawing shows a water-heating system having a water tank 1 and a primary return pipe 2. The water tank 1 has a thermostat 3 associated with a timer switch 4 (a "reactive programmer") having a power supply 5. The timer switch 4 is also coupled to a heat sensor 6 which is attached in turn to the primary return pipe 2. Of course, any location which provides an indication of the temperature of the water in the tank 1 is suitable. Indeed, the thermostat 3 and the heat sensor 6 may be integrated into one component. The timer switch 4 governs the operation of a gas burner for heating the water in the tank 1.

The timer switch 4 functions as a normal timer, switching the water heater on and off according to a pre-set programme. During the time in which the timer switch 4 is on, the thermostat 3 regulates the amount of heating according to pre-set minimum and maximum temperatures. Typically the minimum and maximum temperatures are approximately 60 and approximately 70 °C. However, during the programmed "off' periods, the heat sensor 6 is able to detect the temperature of any water in the water tank 1. If the temperature of this water falls below a pre-determined, but adjustable, value, the timer switch 4 will automatically switch to the on position, thereby firing the water heater. This pre-determined value is less than the minimum setting for the temperature of the thermostat 3 and is typically 45 °C. Accordingly, the water in the tank 1 can be maintained at an elevated temperature without having to keep the heater on for the whole 24 hours. This is particularly useful if water is drawn from the water tank 1 when the timer switch 4 is off. If this occurs, the water in the water tank 1 will be replenished with cold water thereby lowering the temperature of the water in the tank 1 and activating the heater. The timer switch 4 remains in the on position for a sufficient period to replenish the hot water supply. This period is also adjustable and varies depending on the nature of the water-heating system. A larger tank will require a longer heating time than a smaller tank. Typically the heating period will be from 20 minutes for a small tank to 1 hour for a large tank.

The timer switch 4 is preferably a digital 24 hour clock having a microprocessor which has a download feature to record the actual time that the water heater was firing.

The power supply 5 is preferably a single power supply to a 13 amp point.

The water-heating system controller of the present invention is useful where the heating system is installed in a building where it is desired that the occupants of the building do not have control over the settings for the heater. For example, in a public house where the landlord deals with the day to day running but the brewery pays the utility bill. In this situation, the brewery are able to pre-programme the system and lock the timer switch, for example using a key code entry system, so that the landlord of the public house is unable to override the settings.

## Claims

1. A controller for a water-heating system comprising a heat sensor arrangement and a switch for controlling the operation of a heater in the heating system, the heat sensor arrangement detecting a temperature of water in a water storage tank of the system, the controller being operable in a first mode in which the switch is controlled to maintain the temperature in a first temperature range, and a second mode in which the switch is turned off until the temperature drops to a second temperature below the lower limit of the first temperature range whereupon the heater is turned on.

2. A controller for a water-heating system according to claim 1, wherein the heater is turned on for a predetermined time in the second mode.

3. A controller for a water-heating system according to claim 1 or 2, wherein the heat sensor comprises a thermostat for providing the first temperature range, and also comprises a diode heat sensor set to the second temperature.

4. A controller for a water-heating system according to claim 3, wherein the diode heat sensor setting is adjustable.

5. A controller for a water-heating system according to claims 3 or 4, wherein the diode heat sensor is for attachment to a primary return pipe of the tank.

6. A controller for a water-heating system according to any preceding claim, wherein the switch also functions as a timer which is programmable to define the times during which the system operates in the first mode.

7. A controller for a water-heating system according to claim 6, wherein the timer is lockable to prevent reprogramming by an unauthorised party.

8. A controller for a water-heating system according to any preceding claim, wherein the first temperature range is from approximately 60 to approximately 70 °C.

9. A controller for a water-heating system according to claim 8, wherein the second temperature lies between 40 and 60°C.

10. A water-heating system comprising a water storage tank, a heater and a controller according to any preceding claim.

11. A water-heating system substantially as described with respect to the accompanying drawing.

12. A controller for a water-heating system, the water heating system comprising a water storage tank, a heater and a thermostat, the controller comprising a heat sensor arrangement and a switch for controlling the operation of the heater in the heating system, the heat sensor arrangement detecting a temperature of water in the water storage tank, the controller being operable in a first mode in which the switch is controlled by the thermostat to maintain the temperature in a first temperature range, and a second mode in which the switch is turned off until the temperature drops to a second temperature detected by the heat sensor arrangement below the lower limit of the first temperature range whereupon the heater is turned on.
